# EUROPÄISCHE PATENTSCHRIFT

(11) **EP 2 439 044 B1**
(45) Veröffentlichungstag und Bekanntmachung des Hinweises auf die Patenterteilung: **13.09.2017**
(21) Anmeldenummer: 11008089.2
(22) Anmeldetag: 06.10.2011
(51) Int. Cl.: B29C 47/76, B29C 47/68, B29C 47/50, B29C 47/74, B29C 47/70

(54) **Extrudieranlage und Verfahren zur Reinigung von Kunststoffschmelzen**
Extrusion assembly and method for cleansing polymer melts
Installation d'extrusion et procédé pour nettoyer des polymères fondus

(30) Priorität: 06.10.2010 DE 102010047482
(43) Veröffentlichungstag der Anmeldung: 11.04.2012
(73) Patentinhaber: Diamat Maschinenbau GmbH, 91550 Dinkelsbühl (DE)
(72) Erfinder: Lechler, Roland, 91550 Dinkelsbühl (DE); Stark, Uwe, 80999 München (DE)
(74) Vertreter: Schneider, Andreas

(56) Entgegenhaltungen:
- EP-A2- 0 698 462
- WO-A1-02/057065
- WO-A1-2007/124519
- DE-A1- 2 258 903
- DE-A1- 4 141 102
- DE-T2- 69 703 291
- JP-A- H11 268 098
- US-A- 3 346 919
- US-A- 3 360 824

## Beschreibung

Die Erfindung betrifft eine Extrudieranlage für ein Kunststoffmaterial. Darüber hinaus betrifft die Erfindung ein Verfahren zum Reinigen einer Kunststoffschmelze sowie ein Verfahren zur Verarbeitung von Kunststoffmaterial.

Für Lebensmittelverpackungen wird anstelle von teurem Polypropylen oftmals Polyethylenterephthalat (PET) verwendet.

Aus Kostengründen kommt dabei häufig gemahlenes Recyclingmaterial zum Einsatz. Dieses ist in der Regel verunreinigt, z.B. mit Klebstoffresten von Etiketten, so daß sich Kunststoff-Folien aus diesem Material nicht für Verpackungen eignen, die in direktem Kontakt mit Lebensmittel stehen.

Es ist daher bekannt, vor der Herstellung der Folien das Ausgangsmaterial zu reinigen. Die Reinigung erfolgt dabei zumeist in separaten Reinigungssystemen.

Darüber hinaus ist es bereits bekannt, die Reinigung des Materials während des Extrudierens des Kunststoffmaterials durchzuführen. Hierfür werden bisher Zweischneckenextrudersysteme eingesetzt. Nachteilig bei derartigen Systemen ist die vergleichsweise teure Antriebstechnik und der hohe Verschleiß, da sich die Extruderschnecken gegenseitig freikämmen. Darüber hinaus ist bei dieser Technik von Nachteil, daß die Güte des Kunststoffmaterials unter der hohen Scherbeanspruchung leidet.

Aus WO 2002/057065 A1 und aus DE 41 41 102 A1 sind Extrudieranlagen bekannt, bei denen zwei Extruder miteinander verbunden sind. Methoden zum Entgasen sind in US 3, 346, 919 und aus DE 697 03 291 T2 beschrieben.

In DE 22 58 903 A1 und US 3,360,824 sind Extruder mit Entgasungsvorrichtungen bekannt, bei denen ein Bypass vorgesehen ist, um das geschmolzene Kunststoffmaterial an der Extruderschnecke vorbeifließen zu lassen, wobei die Schmelze mit Hilfe des Bypasses an einer ersten Stelle aus dem Extruderzylinder heraus und an einer zweiten Stelle wieder in den Extruderzylinder hinein geführt wird.

Eine Aufgabe der vorliegenden Erfindung ist es daher, Kunststoffmaterial auf besonders einfache und preiswerte Art und Weise während des Extrudierens zu reinigen.

Diese Aufgabe wird durch eine Extrudieranlage nach Anspruch 1 bzw. ein Verfahren nach Anspruch 4 oder 5 gelöst.

Die im Folgenden im Zusammenhang mit den Verfahren erläuterten Vorteile und Ausgestaltungen gelten sinngemäß auch für die erfindungsgemäße Anlage und umgekehrt.

Vorteilhafte Ausführungen der Erfindung sind in den Unteransprüchen angegeben.

Eine Kernidee der Erfindung ist es, zwei hintereinander, also in Reihe angeordnete Einschneckenextruder zu verwenden, wobei der erste Einschneckenextruder zum Aufschmelzen des Kunststoffmaterials dient und der zweite Einschneckenextruder zum Reinigen der Schmelze ausgebildet ist. Das Reinigen der Schmelze, insbesondere ein Entfernen von Stoffen, die im Hinblick auf den direkten Kontakt mit Lebensmitteln in dem gereinigten Material nicht enthalten sein dürfen, nachfolgend auch kurz als "toxische Stoffe" bezeichnet, erfolgt in dem zweiten Einschneckenextruder durch Absaugen mit Hilfe einer Absaugvorrichtung.

Durch den Einsatz von Einschneckenextrudern kann eine konstruktiv vergleichsweise einfache Extrudieranlage bereitgestellt werden, die ohne teure Antriebstechnik auskommt. Gegenüber den bekannten Zweischneckenextrudersystemen ist der Verschleiß der Extruderschnecken deutlich verringert, so daß sich insgesamt eine höhere Lebensdauer der Extrudieranlage ergibt. Im Ergebnis kann die Reinigung des Kunststoffmaterials deutlich preiswerter als bei den aus dem Stand der Technik bekannten Systemen erfolgen.

Bei den zu reinigenden Kunststoffen handelt es sich vorzugsweise um Polymere. Besonders vorteilhaft ist die Anwendung der Erfindung für die Reinigung von Polymerabfällen bzw. Polymer-Recyclingmaterial, insbesondere für die Reinigung von PET und dessen Copolymeren.

Da die Extrudieranlage gereinigtes Kunststoffmaterial zur Verfügung stellt, kann dieses unmittelbar anschließend verarbeitet werden. Vorzugsweise wird die Schmelze in Folie gegossen. Alternativ dazu ist auch die Erzeugung eines Kunststoffgranulats mit Hilfe eines Regranuliersystems oder die Extrusion von Kunststoffprofilen möglich.

Bei den zu entfernenden flüchtigen Kontaminationsstoffen handelt es sich insbesondere um die folgenden Kohlenwasserstoffe: Methylbenzol (Toluol), Chlorbenzol und Chloroform (Trichlormethan). Diese Stoffe wandern, nach dem Aufschmelzen der Kunststoffmasse in dem ersten Extruder in Gasform vorliegend, an die Oberfläche der Kunststoffschmelze. Die so aus der Schmelze herausdiffundierenden Stoffe können auf einfache Art und Weise abgesaugt werden. In einer Ausführungsform der Erfindung umfaßt die Extrudieranlage zu diesem Zweck ein dem zweiten Einschneckenextruder zugeordnetes Rückwärts-Entgasungssystem zum Entfernen der flüchtigen Verunreinigungen.

Zum Entfernen nichtflüchtiger Verunreinigungen umfaßt der zweite Einschneckenextruder gemäß der vorliegenden Erfindung eine oder mehrere Entgasungszonen, die als Bypass-Entgasungszonen ausgebildet sind derart, daß in ihnen die Oberfläche der Schmelze vergrößert wird, indem die Schmelze auf einem Umweg durch den Extruderzylinder gezwungen wird, wobei sie durch eine Bypass-Zone des Extruderzylinders an der Schnecke vorbeifließt. Die Bypass-Entgasungszonen sind darüber hinaus derart ausgebildet, daß in ihnen unter Verwendung eines Zerstäubers, durch den hindurch die Schmelze gepreßt wird, Scherkräfte auf die Schmelze aufgebracht werden. Bei den nichtflüchtigen Kontaminationsstoffen handelt es sich insbesondere um die folgenden Kohlenwasserstoffe: MethylSalicylat, Phenyl-Cyclohexan, Benzophenon und Methyl-Stearat.

In einer Ausführungsform der Erfindung weist auch der erste Einschneckenextruder Einrichtungen auf zum Aufbringen von Scherkräfte auf die Schmelze, um die Verunreinigungen an die Oberfläche der Schmelze zu bringen.

Bei der Erfindung erfolgt die Reinigung rein "mechanisch", im wesentlichen beruhend auf dem Aufbringen von Scherkräften auf die Schmelze und dem Bereitstellen einer großen Schmelzeoberfläche zum Ablaufen eines Diffusionsprozesses und dem anschließenden Entfernen der aus der Kunststoffschmelze austretenden Schadstoffe, vorzugsweise durch Absaugen.

Während bei Zweischneckenextrudersystemen eine mechanische Scherung des Kunststoffmaterials bauartbedingt ohnehin stets erfolgt, wird bei der erfindungsgemäßen Extrudieranlage durch entsprechende Einrichtungen ein Scherfließen erst hervorgerufen bzw. wird dieser Effekt noch verstärkt.

Das Aufbringen der Scherkräfte auf das zu reinigende Kunststoffmaterial erfolgt dabei kontrolliert und steuerbar derart, daß eine übermäßige, unnötige Scherung und damit Beanspruchung des Materials vermieden wird. Eine aus der mechanischen Beanspruchung des Kunststoffmaterials resultierende Verschlechterung der Materialgüte kann mit der vorliegenden Erfindung minimiert werden. Gegenüber den herkömmlichen, zur Reinigung eingesetzten Zweischneckenextrudersystemen zeichnet sich die Erfindung insbesondere dadurch aus, daß der Wert der intrinsischen Viskosität durch die Reinigungsbehandlung deutlich weniger abnimmt, was in einer deutlich höheren Materialqualität des Endproduktes, beispielsweise einer Kunststoff-Folie, resultiert.

Im Ergebnis sind daher nicht nur die Grundkosten der Extrudieranlage, die Wartungskosten und der Energieverbrauch geringer als bei vergleichbaren, bisher bekannten Anlagen. Das erfindungsgemäße Verfahren ermöglicht auch eine bessere Materialqualität.

Mit der vorliegenden Erfindung wird eine Extrudieranlage bereitgestellt, die es ermöglicht, heißgewaschenes Recyclingmahlgut unmittelbar in eine Kunststoff-Folie zu verarbeiten, die für den direkten Lebensmittelkontakt geeignet ist. Die Schmelze wird hierfür soweit von Schadstoffen gereinigt, das eine daraus hergestellte Verpackung für den Lebensmitteldirektkontakt geeignet ist, insbesondere der für die oben genannten toxischen Stoffe den von der U.S. Food and Drug Administration (FDA) vorgegebenen Grenzwert von 10 ppb (0,01 ppm) eingehalten wird.

Ein Ausführungsbeispiel der Erfindung wird nachfolgend anhand der Zeichnungen näher erläutert. Hierbei zeigen:
- Fig. 1: eine Darstellung der Extrudieranlage und

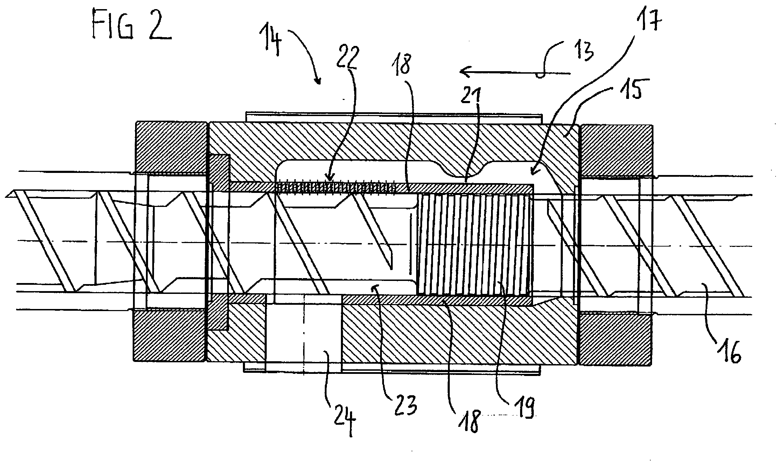

- Fig. 2: eine Detaildarstellung einer Entgasungszone.

Sämtliche Figuren zeigen die Erfindung lediglich schematisch und mit ihren wesentlichen Bestandteilen. Gleiche Bezugszeichen entsprechen dabei Elementen gleicher oder vergleichbarer Funktion.

Die Extrudieranlage 1 umfaßt zwei, in Reihe hintereinander angeordnete Einschneckenextruder, nämlich einen ersten, zum Aufschmelzen des Kunststoffs dienenden Einschneckenextruder, nachfolgend kurz als "Aufschmelzextruder" 2 bezeichnet und einen zweiten, zum Reinigen der Schmelze dienenden Einschneckenextruder, nachfolgend kurz als "Entgasungsextruder" 3 bezeichnet.

Die Drehzahl der beiden Extruder 2, 3 kann unabhängig voneinander gesteuert werden. Dies wird durch separate Antriebe 4, 5 gewährleistet. Durch die unabhängige Drehzahlsteuerung kann die Menge des geförderten Kunststoffmaterials in den beiden Extrudern 2, 3 aufeinander abgestimmt werden. Insbesondere läßt sich der Drehzahlbereich für die Entgasungszonen optimal einstellen. Insgesamt ergibt sich damit eine sehr flexible Anordnung, die sich optimal auch für verschiedene Ausgangsmaterialien bzw. Ausgangsmaterialmischungen mischungen einstellen läßt.

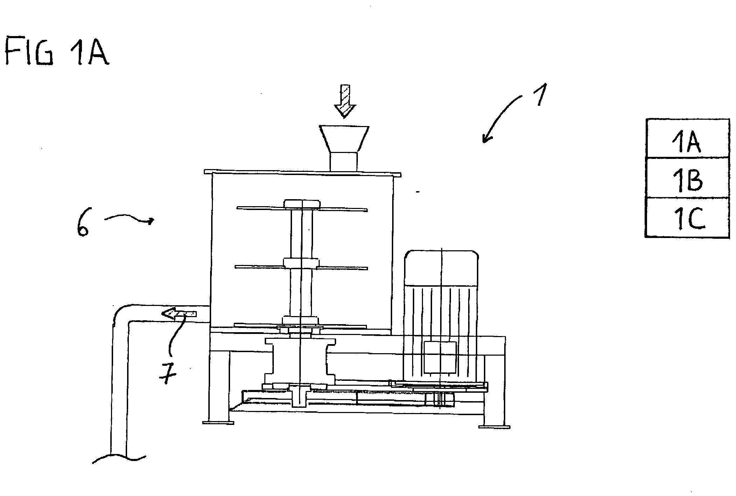

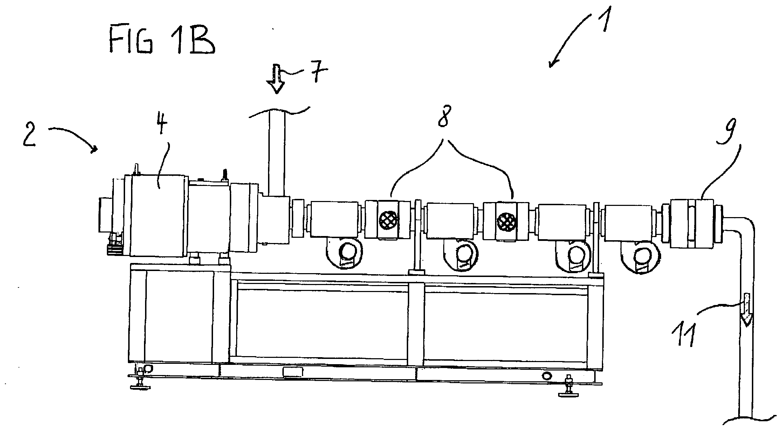

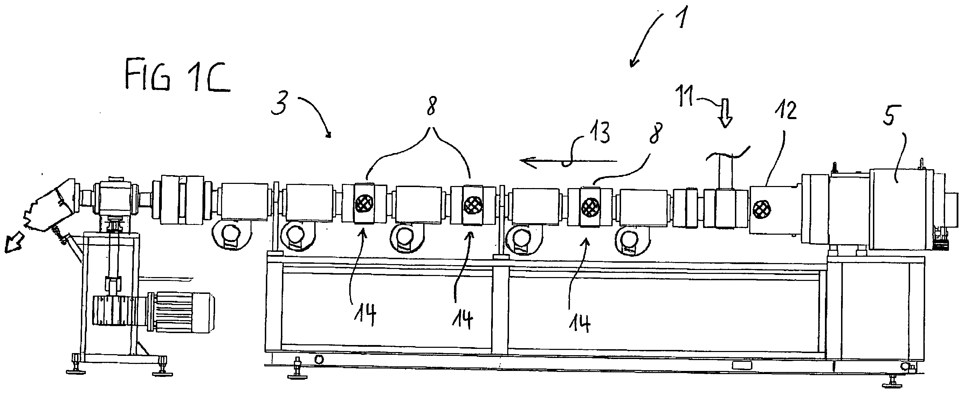

Der Extrudieranlage 1 vorgeschaltet oder, wie in Fig. 1 dargestellt, als Teil der Extrudieranlage 1 ausgeführt ist ein Kristallistor 6, in dem amorphes PET (A-PET), beispielsweise heißgewaschenes A-PET-Flaschenmahlgut, wie es durch Recycling von Kunststoff-Flaschen gewonnen wird, in einen semi-kristallinen Zustand zurückgeführt wird, um ein Verkleben der Extruder 2, 3 durch aufgeschmolzenes A-PET zu verhindern. Die Rekristallisation erfolgt oberhalb der PET-Kristallisationstemperatur (ca. 127° C), typischerweise bei 140 °C bis 150 °C bei einer Verweilzeit von etwa 30 Minuten. Die Wärme wird beispielsweise durch Friktion erzeugt, d.h. das Kunststoffmaterial wird geschert bzw. verrieben. Alternativ kann auch ein Kristallisator 6 eingesetzt werden, der die Wärme auf der Grundlage von Heißluft oder InfrarotStrahlung erzeugt.

Dem Aufschmelzextruder 2 wird das aus dem Kristallisator 6 kommende, rekristallisierte PET-Material zugeführt, wie dies durch Pfeil 7 symbolisiert ist. In dem Extruder 2 wird das PET-Material nicht nur aufgeschmolzen. Zugleich wird auch Feuchtigkeit abgesaugt, welche die Qualität des Endproduktes beeinträchtigen würde. Zur Entnahme der Feuchtigkeit dient ein Vakuum-Entgasungssystem 8. Die Art und Weise, wie die Feuchtigkeit abgesaugt wird, ist dem Grunde nach aus dem Stand der Technik bekannt.

Im Anschluß an den Aufschmelzextruder 2 wird der entfeuchtete, aufgeschmolzene Kunststoff in einem Filtrationssystem 9 von mechanischen Verunreinigungen (insbesondere Aluminium, Papier, Staub, Holz, metallischen Verunreinigungen usw.) gereinigt

In der Extrudieranlage 1 wird mit Hilfe von Pumpen der erforderliche Arbeitsdruck aufgebaut, der einerseits für die Beförderung des Kunststoffmaterials durch die Extruder 2, 3 und andererseits für das mechanische Herausfiltern von Fremdstoffen aus der Kunststoffschmelze benötigt wird. In der Extrudieranlage 1 beträgt das Druckgefälle typischerweise zwischen 40 und 60 bar. Typische Arbeitsdrucke liege in einem Bereich von 35 bis 150 bar.

Im Anschluß an das Filtrationssystem 9 wird das entfeuchtet und gefilterte Material über eine Zahnradpumpe und einen Strangzerteiler (nicht im einzelnen dargestellt) als feine Schmelzefäden in den Entgasungsextruder 3 eingespeist, wie dies durch Pfeil 11 symbolisiert wird. Der Strangzerteiler dient dazu, die flüchtigen Schadstoffe von der Kunststoffmasse zu trennen und in Gasform zu überführen. Zum Entfernen dieser flüchtigen Schadstoffe ist ein dem Entgasungsextruder 3 zugeordnetes Rückwärts-Entgasungssystem 12 vorgesehen, das mit dem Vakuumsystem 8 gekoppelt ist. Da es sich um eine Rückwärtsentgasung handelt, ist die Entgasungsöffnung in Förderrichtung 13 der Extruderschnecke gesehen vor dem Einzug des Extruders 3 angeordnet. Mit dem Rückwärts-Entgasungssystem 12 werden vor allem die leichtflüchtigen Schadstoffe aus der Schmelze entfernt.

Die Verwendung eines Rückwärts-Entgasungssystems 12 ist an dieser Stelle von Vorteil, weil ein Druckabfall, wie er bei Einsatz eines Vakuumsystems auftreten würde, am Eingang des Extruders 3 vermieden wird. Der für den Betrieb des Extruders 3 benötigte Arbeitsdruck wird somit nicht beeinträchtigt. Zugleich werden nur die flüchtigen Kontaminationsstoffe entfernt, während die zähviskose Schmelze die im Rückwärts-Entgasungssystem 12 enthaltene Barriere (nicht dargestellt) nicht überwinden kann, so daß eine zusätzliche Abdichtung des Entgasungssystems, um ein Austreten der Schmelze zu verhindern, nicht notwendig ist.

Mit der erfindungsgemäßen Extrudieranlage 1 werden nicht nur die flüchtigen Kontaminationsstoffe entfernt, sondern die Schmelze wird auch von den nichtflüchtigen toxischen Stoffe gereinigt. Die nichtflüchtigen toxischen Stoffe werden dabei aus der Schmelze herausgezwungen. Um dies zu erreichen, erfüllt die erfindungsgemäße Extrudieranlage 1 drei Voraussetzungen. Zum einen wird eine Mindestverweilzeit der Kunststoffschmelze im Extruder gewährleistet. Darüber hinaus herrscht in der Extrudieranlage der erforderliche Arbeitsdruck. Drittens verfügt die Kunststoffschmelze über eine ausreichend große Oberfläche, damit die in Gasform vorliegenden toxischen Stoffe an die Oberfläche der Schmelze gelangen und dort abgesaugt werden können.

Die Kunststoffschmelze durchläuft in dem Entgasungsextruder 3 in dem vorliegenden Ausführungsbeispiel drei identische, hintereinander angeordnete Entgasungszonen 14. Je nach dem Kontaminationsgrad des Ausgangsmaterials und dem gewünschten Reinigungsgrad kann auch die Anwendung von zwei Entgasungszonen 14 oder die Anwendung einer einzelnen Entgasungszone 14 ausreichend sein. In den Entgasungszonen 14 werden nicht nur die schwerer flüchtigen toxischen Stoffen abgesaugt, sondern vor allem die nichtflüchtigen toxischen Stoffe von der Kunststoffmasse abgetrennt und dann ebenfalls über das Vakuumsystem 8 abgesaugt.

Da sich das Material in der Kunststoffschmelze in hochlaminaren Strömungen bewegt, ist ein effektiver Mischvorgang erforderlich, um die nichtflüchtigen toxischen Stoffe an die Oberfläche der Schmelze zu bringen. Jede Entgasungszone 14 ist daher derart ausgebildet, daß zum einen ein Mischen des Kunststoffmaterials, zum anderen ein Bereitstellen einer möglichst großen Oberfläche der Schmelze und zum Dritten ein Absaugen der toxischen Stoffe möglich ist.

Jede Entgasungszone 14 ist zu diesem Zweck in mehrere Abschnitte unterteilt. In einem ersten Abschnitt wird der Schmelzestrang zunächst auf einen Umweg durch den Extruderzylinder 14 gezwungen, indem durch konstruktive Maßnahmen die Schmelze auf eine äußerst große Oberfläche ausgebreitet wird. Genauer gesagt wird die Kunststoffmasse aus der Schnecke 16 in eine Bypass-Zone 17 des Zylinders 15 hineingedrückt. Die Bypass-Zone 17 ist ein zwischen der Innenseite des Zylinders 15 einerseits und einem die Schnecke 16 von dem Zylinder 15 trennenden, zusätzlichen Schneckengehäuse 18 andererseits gelegener Bereich, der es erlaubt, daß die Schmelze durch diesen Bereich hindurch an der Schnecke 16 vorbeifließt. Zum Hineindrücken des Kunststoffmaterials in die Bypass-Zone 17 dient eine auf der Schnecke 16 angebrachte Gegenspirale 19, die entgegengesetzt zu dem auf der Schnecke 16 üblicherweise vorgesehenen Gewindegang gewickelt ist, der die Kunststoffmasse zwingt, in Schneckenrichtung und damit in der üblichen Förderrichtung 13 zu fließen. Aufgrund der Wirkung der Gegenspirale 19 fließt die Schmelze in den hierzu vorgesehenen Ausweichraum im Zylinder, die Bypass-Zone 17. Dort wird die Masse mit Hilfe von Engstellen 21 flach ausgebreitet. Im Ergebnis wird für ein definiertes Volumen der Schmelze eine größere Oberfläche erzeugt. Dies ermöglicht das Diffundieren der Schadstoffe aus dem Grundmaterial. Die Schmelze ist in diesen Abschnitten, die etwa 10 % der Wegstrecke der Kunststoffschmelze in dem Entgasungsextruder 3 ausmacht, in etwa 3 bis 5 mm dünne Schichten ausgewalzt.

In einem zweiten Abschnitt der Entgasungszone 14 werden hohe Scherkräfte auf die Kunststoffmasse aufgebracht. Dies wird vorteilhafterweise dadurch erreicht, daß die Kunststoffschmelze unter Verwendung eines nach Art eines Siebes ausgebildeten Zerstäubers 22, durch das hindurch ähnlich wie bei dem Strangzerteiler die Schmelze gepreßt wird, in eine Vielzahl von kleinen und kleinsten Kunststoffsträngen zerteilt und unter Scherspannung gesetzt wird. Der Zerstäuber 22 ist in dem Schneckengehäuse 18 angebracht, so daß bei dem Durchtritt der Kunststoffmasse durch den Zerstäuber 22 das Schmelzematerial wieder in das Schneckengehäuse 18 eintritt und von der Schnecke in Förderrichtung 13 bewegt werden kann. In diesem Abschnitt werden durch Scherfließen insbesondere die anhaftenden nichtflüchtigen Kontaminationen von der Schmelze abgeschert und damit gelöst. Hierzu ist der Zerstäuber 22 derart ausgebildet, daß bei einem Durchtritt der Schmelze durch den Zerstäuber 22 derart hohe Scherkräfte auf die Kunststoffmasse wirken, daß die Scherspannung den für den Beginn des Scherfließens notwendigen Wert übersteigt. Während des Scherfließens kommt es dann zum Aneinandergleiten einzelner Molekülketten bzw. zu einer Umlagerung einzelner Molekülsegmente des Polymers und im Ergebnis zum Lösen der toxischen Stoffe aus der Masse. Bohrungsdurchmesser und Wandstärke des Zerstäubers 22 sind dabei derart gewählt, daß eine für das Abscheren der nichtflüchtigen toxischen Stoffe erforderliche Scherwirkung erreicht wird.

Es schließt sich als dritter Abschnitt der Entgasungszone 14 ein sehr tief geschnittener Bereich 23 an, in dem das Kunststoffmaterial kurzzeitig vollständig druckentspannt wird, damit die Vakuumabsaugung funktionieren kann. Die Absaugung erfolgt unter Verwendung der Vakuumanlage 8. Hierzu ist in jeder Entgasungszone 14 im Bereich des dritten Abschnitts eine Entgasungsöffnung 24 vorgesehen.

Nach dem Durchlaufen der Entgasungszonen 14 wird die gereinigte Schmelze an einer Anlage (nicht dargestellt) zur Weiterverarbeitung, z.B. zu Folie, übergeben, wie dies durch Pfeil 25 symbolisiert ist.

Die Mindestverweilzeit des Kunststoffmaterials in der Extrudieranlage 1 wird in erster Linie durch die Schneckengeometrie bestimmt. So ist insbesondere das Schneckenvolumen groß genug, damit das Kunststoffmaterial lange genug in den Extrudern 2, 3 verbleibt. Insbesondere sind Länge und Durchmesser sowie Gangtiefen der Schnecke so gewählt, daß eine Mindestverweilzeit von 5 Minuten 30 Sekunden erreicht wird. Ist dies der Fall, entmischen sich die Komponenten von selbst, wenn sie, wie dies bei der vorliegenden Anlage der Fall ist, während dieser Zeit dauerhaft bewegt werden. Es muß dann nur noch eine Absaugung erfolgen.

Die Schneckengeometrie wird entsprechend der Maschinengröße derart angepaßt, daß für alle Maschinengrößen die Mindestverweilzeit eingehalten wird. Der Materialdurchsatz der erfindungsgemäßen Extrudieranlage 1 beträgt typischerweise zwischen 500 und 2000 kg/h. Auch bei einem Materialdurchsatz von 1000 kg/h beträgt die Mindestverweilzeit in der Anlage 5 Minuten 30 Sekunden, und zwar unabhängig von der Ausgangsmaterialmischung.

In einer Ausführungsform der Erfindung erreicht die Extrudieranlage 1 eine Reinigungseffizenz von 50 % bei vollkontaminierten Material. Das bedeutet, daß dem Aufschmelzextruder 2 eine Mischung von 50 % verunreinigtem, d. h. nicht lebensmitteldirektkontakttauglichem Material und 50 % bereits gereinigtem, d. h. lebensmitteldirektkontakttauglichem Material zugeführt werden kann, welches dann zu einer Schmelze verarbeitet wird, die zu 100 % lebensmitteldirektkontakttauglich ist, also den Anforderungen an eine Lebensmitteldirektkontakt-Zulassung genügt. Tests bestätigen eine Reinigungseffizienz von >99 %, wobei Restverunreinigungen unterhalb des FDA-Grenzwerts liegen.

### Bezugszeichenliste

- 1: Extrudieranlage
- 2: Aufschmelzextruder
- 3: Entgasungsextruder
- 4: Antrieb
- 5: Antrieb
- 6: Kristallisator
- 7: Zufuhr von rekristallisiertem PET-Material
- 8: Vakuum-Entgasung
- 9: Filtrationssystem
- 10: (frei)
- 11: Zufuhr der entfeuchteten Schmelze
- 12: Rückwärts-Entgasungssystem
- 13: Förderrichtung
- 14: Entgasungszone
- 15: Extruderzylinder
- 16: Schmelze
- 17: Bypass-Zone
- 18: Schneckengehäuse
- 19: Gegenspirale
- 20: (frei)
- 21: Engstelle
- 22: Zerstäuber
- 23: Tiefer bereich
- 24: Entgasungsöffnung
- 25: Zufuhr der gereinigten Schmelze

## Patentansprüche

1. Extrudieranlage (1), ausgebildet zum Reinigen eines Kunststoffmaterials, insbesondere eines Polymermaterials, mit einem ersten Einschneckenextruder (2) zum Aufschmelzen des Kunststoffmaterials und mit einem hinter dem ersten Einschneckenextruder (2) angeordneten, mit der Kunststoffschmelze gespeisten, zweiten Einschneckenextruder (3) zum Reinigen der Schmelze, sowie mit einer Vorrichtung (8) zum Absaugen der Verunreinigungen, wobei die Verunreinigungen zum Absaugen an die Oberfläche der Schmelze gebracht werden,
wobei der zweite Einschneckenextruder (3) zum Entfernen von Verunreinigungen, insbesondere zum Entfernen nichtflüchtiger Verunreinigungen, eine Anzahl von Entgasungszonen (14) aufweist, die als Bypass-Entgasungszonen ausgebildet sind derart, daß in ihnen
- die Oberfläche der Schmelze vergrößert wird, indem die Schmelze auf einem Umweg durch den Extruderzylinder (15) gezwungen wird, wobei sie durch eine Bypass-Zone (17) des Extruderzylinders (15) an der Schnecke (16) vorbeifließt, wobei die Bypass-Zone (17) ein zwischen der Innenseite des Extruderzylinders (15) einerseits und einem die Schnecke (16) von dem Extruderzylinder (15) trennenden Schneckengehäuse (18) andererseits liegender Bereich ist, und
- unter Verwendung eines Zerstäubers (22), durch den hindurch die Schmelze gepreßt wird, Scherkräfte auf die Schmelze aufgebracht werden.

2. Extrudieranlage (1) nach Anspruch 1, wobei auch der erste Einschneckenextruder (2) mit Einrichtungen zum Aufbringen von Scherkräfte auf die Schmelze versehen ist, um die Verunreinigungen an die Oberfläche der Schmelze zu bringen.

3. Extrudieranlage (1) nach Anspruch 1 oder 2, mit einem dem zweiten Einschneckenextruder (3) zugeordneten Rückwärts-Entgasungssystem (12) zum Entfernen von Verunreinigungen, insbesondere zum Entfernen flüchtiger Verunreinigungen.

4. Verfahren zum Reinigen einer Kunststoffschmelze, insbesondere einer Polymerschmelze, bei dem das Reinigen in einer Extrudieranlage (1) erfolgt, die einen ersten Einschneckenextruder (2) und einen hinter dem ersten Einschneckenextruder (2) angeordneten zweiten Einschneckenextruder (3) aufweist, wobei das Kunststoffmaterial in dem ersten Einschneckenextruder (2) aufgeschmolzen und die Schmelze in den zweiten Einschneckenextruder (3) eingespeist wird, und wobei die Schmelze in dem zweiten Einschneckenextruder (3) gereinigt wird, indem Verunreinigungen abgesaugt werden, zu welchem Zweck diese zuvor an die Oberfläche der Schmelze gebracht werden,
wobei das Entfernen von Verunreinigungen, insbesondere das Entfernen nichtflüchtiger Verunreinigungen, in einer Anzahl von Entgasungszonen (14) des zweiten Einschneckenextruders (3) erfolgt, die als Bypass-Entgasungszonen ausgebildet sind derart, daß
- die Oberfläche der Schmelze vergrößert wird, indem die Schmelze auf einem Umweg durch den Extruderzylinder (15) gezwungen wird, wobei sie durch eine Bypass-Zone (17) des Extruderzylinders (15) an der Schnecke (16) vorbeifließt, wobei die Bypass-Zone (17) ein zwischen der Innenseite des Extruderzylinders (15) einerseits und einem die Schnecke (16) von dem Extruderzylinder (15) trennenden Schneckengehäuse (18) andererseits liegender Bereich ist, und
- unter Verwendung eines Zerstäubers (22), durch den hindurch die Schmelze gepreßt wird, Scherkräfte auf die Schmelze aufgebracht werden.

5. Verfahren zur Verarbeitung von Kunststoffmaterial, insbesondere von Polymermaterial, bei dem das Material in einer zwei hintereinander angeordnete Einschneckenextruder (2, 3) aufweisenden Extrudieranlage (1) aufgeschmolzen und in derselben Extrudieranlage (1) unter Anwendung des Verfahrens nach Anspruch 4 von flüchtigen und nichtflüchtigen Verunreinigungen gereinigt und die gereinigte Schmelze unmittelbar anschließend verarbeitet, insbesondere in Folie gegossen wird.

## Claims

1. Extrusion assembly (1), designed for cleaning a plastics material, in particular a polymer material, comprising a first single-screw extruder (2), which is intended for melting the plastics material, and comprising a second single-screw extruder (3), which is arranged downstream of the first single-screw extruder (2), is fed the plastics melt and is intended for cleaning the melt, and also comprising a device (8) for sucking away the impurities, the impurities being brought to the surface of the melt for being sucked away,
the second single-screw extruder (3) having, for the removal of impurities, in particular for the removal of nonvolatile impurities, a number of degassing zones (14), which are designed as bypass degassing zones in such a way that in them
- the surface area of the melt is increased by the melt being forced through the extruder barrel (15) by a circuitous route, it flowing past the screw (16) through a bypass (17) of the extruder barrel (15), the bypass (17) being a region lying between the inner side of the extruder barrel (15) on the one hand and a screw housing (18) that separates the screw (16) from the extruder barrel (15) on the other hand, and
- shearing forces are applied to the melt by using an atomizer (22), through which the melt is forced.

2. Extrusion assembly (1) according to Claim 1, the first single-screw extruder (2) also being provided with devices for applying shearing forces to the melt in order to bring the contaminants to the surface of the melt.

3. Extrusion assembly (1) according to Claim 1 or 2, comprising a rearward degassing system (12), which is assigned to the second single-screw extruder (3) and is intended for the removal of contaminants, in particular for the removal of volatile contaminants.

4. Method for cleaning a plastics melt, in particular a polymer melt, in which the cleaning is performed in an extrusion assembly (1), which has a first single-screw extruder (2) and a second single-screw extruder (3) arranged downstream of the first single-screw extruder (2), the plastics material being melted in the first single-screw extruder (2) and the melt being fed into the second single-screw extruder (3), and the melt being cleaned in the second single-screw extruder (3) by contaminants being sucked away, for which purpose they are previously brought to the surface of the melt,
the removal of contaminants, in particular the removal of nonvolatile contaminants, being performed in a number of degassing zones (14) of the second single-screw extruder (3), which are formed as bypass degassing zones in such a way that
- the surface area of the melt is increased by the melt being forced through the extruder barrel (15) by a circuitous route, it flowing past the screw (16) through a bypass (17) of the extruder barrel (15), the bypass (17) being a region lying between the inner side of the extruder barrel (15) on the one hand and a screw housing (18) that separates the screw (16) from the extruder barrel (15) on the other hand, and
- shearing forces are applied to the melt by using an atomizer (22), through which the melt is forced.

5. Method for processing plastics material, in particular polymer material, in which the material is melted in an extrusion assembly (1) having two single-screw extruders (2, 3) arranged one behind the other and is cleaned of volatile and nonvolatile contaminants in the same extrusion assembly (1) by applying the method according to Claim 4 and, directly thereafter, the cleaned melt is processed, in particular extruded as a cast film.

## Revendications

1. Chaîne d'extrusion (1), conçue en vue du nettoyage d'un matériau en matière plastique, en particulier d'un matériau polymère, avec une première extrudeuse à vis unique (2), laquelle est destinée à la fusion du matériau en matière plastique, et avec une deuxième extrudeuse à vis unique (3), laquelle est disposée à l'arrière de la première extrudeuse à vis unique (2) et laquelle est alimentée avec la masse de matière plastique fondue, en vue du nettoyage de la masse fondue, ainsi qu'avec un dispositif (8) destiné à l'aspiration des impuretés ;
dans laquelle les impuretés sont amenées à la surface de la masse fondue en vue d'y être aspirées ;
dans laquelle la deuxième extrudeuse à vis unique (3), laquelle est destinée à l'élimination des impuretés, en particulier à l'élimination des impuretés non volatiles, présente un certain nombre de zones de dégazage (14), lesquelles sont conçues sous la forme de zones de dégazage de dérivation, de telle sorte que, à l'intérieur de celles-ci :
- la surface de la masse fondue est agrandie, en ce sens que la masse fondue est contrainte à réaliser un détour par le cylindre d'extrusion (15) ; dans laquelle la masse fondue s'écoule à travers une zone de dérivation (17) du cylindre d'extrusion (15), en passant devant la vis sans fin (16) ; dans laquelle la zone de dérivation (17) est une zone qui se trouve entre la face intérieure du cylindre d'extrusion (15), d'une part, et un carter de la vis sans fin (18), lequel sépare la vis sans fin (16) du cylindre d'extrusion (15), d'autre part ; et
- des forces de cisaillement sont appliquées sur la masse fondue au moyen d'un pulvérisateur (22), par l'intermédiaire duquel la masse fondue est comprimée et passe à travers.

2. Chaîne d'extrusion (1) selon la revendication 1, dans laquelle la première extrudeuse à vis unique (2) est également pourvue de mécanismes destinés à l'application de forces de cisaillement sur la masse fondue, en vue d'amener les impuretés à la surface de la masse fondue.

3. Chaîne d'extrusion (1) selon la revendication 1 ou 2, avec un système de dégazage (12) en sens inverse, lequel est associé à la deuxième extrudeuse à vis unique (3) et lequel est destiné à l'élimination des impuretés, en particulier à l'élimination des impuretés volatiles.

4. Procédé destiné au nettoyage d'une masse de matière plastique fondue, en particulier d'une masse de polymère fondue, pour lequel le nettoyage est réalisé dans une chaîne d'extrusion (1) qui présente une première extrudeuse à vis unique (2) ainsi qu'une deuxième extrudeuse à vis unique (3), laquelle est disposée à l'arrière de la première extrudeuse à vis unique (2) ; dans lequel le matériau en matière plastique est fondu dans la première extrudeuse à vis unique (2) et la masse fondue est alimentée dans la deuxième extrudeuse à vis unique (3) ; et dans lequel la masse fondue est nettoyée dans la deuxième extrudeuse à vis unique (3), en ce sens que les impuretés sont aspirées et à cette fin, celles-ci sont préalablement amenées à la surface de la masse fondue ; selon lequel l'élimination des impuretés, en particulier l'élimination des impuretés non volatiles, est réalisée dans un certain nombre de zones de dégazage (14) de la deuxième extrudeuse à vis unique (3), lesquelles sont conçues sous la forme de zones de dégazage de dérivation, de telle sorte que :
- la surface de la masse fondue est agrandie, en ce sens que la masse fondue est contrainte à réaliser un détour par le cylindre d'extrusion (15) ; selon lequel la masse fondue s'écoule à travers une zone de dérivation (17) du cylindre d'extrusion (15), en passant devant la vis sans fin (16) ; selon lequel la zone de dérivation (17) est une zone qui se trouve entre la face intérieure du cylindre d'extrusion (15), d'une part, et un carter de la vis sans fin (18), lequel sépare la vis sans fin (16) du cylindre d'extrusion (15), d'autre part ; et
- des forces de cisaillement sont appliquées sur la masse fondue au moyen d'un pulvérisateur (22), par l'intermédiaire duquel la masse fondue est comprimée et passe à travers.

5. Procédé destiné au traitement d'un matériau en matière plastique, en particulier d'un matériau polymère, pour lequel le matériau est fondu dans une chaîne d'extrusion (1), laquelle présente deux extrudeuses à vis unique (2, 3) qui sont disposées l'une à la suite de l'autre, et le matériau fondu est nettoyé des impuretés volatiles et non volatiles dans cette même chaîne d'extrusion (1) au moyen du procédé conformément à la revendication 4 et la masse fondue ainsi nettoyée est ensuite directement traitée, en particulier est coulée sous forme de feuilles.
